# EUROPEAN PATENT APPLICATION

(11) **EP 0 982 617 A1**
(43) Date of publication of application: **01.03.2000**
(21) Application number: 98123190.5
(22) Date of filing: 04.12.1998
(51) Int. Cl.: G02C 7/04

(54) **Colored contact lens with a natural appearance**

(30) Priority: 28.08.1998 US 143116
(71) Applicant: INNOVA, Inc, Hsinchu (TW)
(72) Inventor: Wang, Joe, Hsinchu (TW); Chen, Cheng-Shio, Hsinchu (TW)
(74) Representative: Winter, Brandl, Fürniss, Hübner, Röss, Kaiser, Polte, Kindermann Partnerschaft

(57) **Abstract**

Disclosed is a colored contact lens with a natural appearance comprises a non-opaque pupil section and an iris section that is at least partially opaque. In the iris section a pattern with colors is applied. The pattern comprises a background sub-pattern and a subjective sub-pattern wherein said background sub-pattern comprises an inner sub-pattern and an outer sub-pattern, each having a color. The subjective sub-pattern of this invention comprises a radial pattern. The colored contact lens of this invention provides a pattern that is similar to that of the iris of human eyes and performs a very natural appearance.

## Description

### FIELD OF THE INVENTION

The present invention relates to a colored contact lens with a natural appearance, especially to a pattern to be applied to a colored contact lens that changes colors of wearer's iris of wearer while providing a natural appearance to the iris of the wearer.

### BACKGROUND OF THE INVENTION

The contact lens is a useful vision correction instrument for people having defects in vision. The contact lens makes it possible for a person to avoid the inconvenience of the glasses.

Recently the "colored" contact lens is widely welcomed by the contact lens wearers. The colored contact lens is one that is applied or embedded with a colored or opaque pattern. The pattern may comprise a number of sub-patterns of same or different colors. Dependent on the pattern, the colored contact lens may change the colors and/or the appearance of the wearer's iris. As a result, a color contact lens functions both as a vision correction instrument and a facial adornment.

US patent No. 4,582,402 disclosed a colored contact lens with a colored pattern on an opaque area within the iris area of the lens. The pattern was consisted of dots with diameters and the dots were distributed in the iris area in a random way. Only one color was applied to the dots of the pattern. The invented contact lens was able to strengthen the pattern of the iris and Knapp achieved commercial success from this contact lens.

US patent application series number 07/430,222 related to a colored contact lens having very natural appearance. This invention disclosed a lens having a non-opaque pupil section and an iris section that was at least partially opaque and comprised of two portions. A pattern comprising two sub-patterns was designed. The two sub-patterns were in different colors, divided by a jagged border and distributed in an outer portion and an inner portion of the iris area, respectively. Shades of different patterns and colors were applied to the sub-patterns. According to this patent, the colored contact lens showed a "very natural" appearance.

Following the trend to provide a colored contact lens with natural appearance, it is thus a need to have a colored contact lens with a novel pattern to provide a natural appearance to the wearers of the contact lens.

### OBJECTIVES OF THE INVENTION

The objective of this invention is to provide a novel colored contact lens to provide a natural appearance to the iris of the wearer.

Another objective of this invention is to provide a colored contact lens with a pattern comprising a background sub-pattern and a subjective sub-pattern.

Another objective of this invention is to provide a colored pattern for a contact lens to provide a natural appearance to the iris of the wearer.

### SUMMARY OF THE INVENTION

According to this invention, the colored contact lens with a natural appearance comprises a non-opaque pupil section and an iris section that is at least partially opaque. In the iris section a pattern with colors is applied. The pattern comprises a background sub-pattern and a subjective sub-pattern wherein said background sub-pattern comprises an inner sub-pattern and an outer sub-pattern, each having a color. The subjective sub-pattern of this invention comprises a radial pattern. The colored contact lens of this invention provides a pattern that is similar to that of the iris of human eyes and performs a very natural appearance.

The above and other objectives and advantages may be clearly understood from the detailed description by referring to the following drawings.

### IN THE DRAWINGS.

Fig. 1 illustrates the outer sub-pattern of the background sub-pattern of one embodiment of the colored contact lens with a natural appearance of the invention.
Fig. 2 illustrates its inner sub-pattern.
Fig. 3 illustrates its subjective sub-pattern.
Table I shows combinations of pigments for the background sub-pattern of the embodiments of the colored contact lens with a natural appearance of this invention.
Table II shows combinations of pigments for its subjective sub-pattern.
Table III shows combinations of pigments for patterns of other embodiments of the colored contact lens of this invention.

### DETAILED DESCRIPTION OF THE INVENTION

Generally speaking, the colored contact lens with a natural appearance of this invention comprises a non-opaque section and a partially opaque section. The non-opaque section locates at center of the lens, approximately corresponding to the pupil of the eye. The partially opaque section is at least partially opaque and locates at the surrounding of the pupil, approximately corresponding to the iris and its surroundings. For purpose of convenience, in the following description the non-opaque section will be referred to as the "pupil section" and the opaque section will be referred to as the "iris section". In the iris section, a particular colored pattern is applied to change the colors and appearance of the iris of the wearer. The colored pattern may be divided into a background sub-pattern and a subjective sub-pattern.

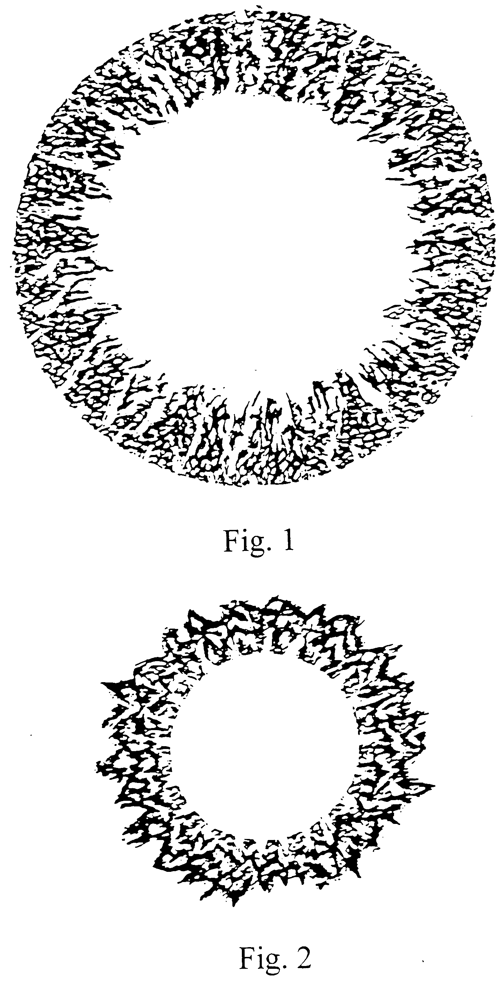

In some of the embodiments of this invention, the background sub-pattern comprises an inner sub-pattern and an outer sub-pattern. Fig. 1 illustrates the outer sub-pattern of the background sub-pattern of one embodiment of the colored contact lens with a natural appearance of the invention. Fig. 2 illustrates its inner sub-pattern. As shown in these figures, the background sub-pattern comprises substantially two rings of patterns, in which:

The outer sub-pattern shown in Fig. 1 comprises basically a ring of a light-misty pattern, with the shadow ratio of about 65-75%. The outer border of the outer sub-pattern forms a substantial circle and its inner border forms a jagged with arc edges.

The inner sub-pattern shown in Fig. 2 comprises basically a ring of a light-misty pattern, with the ring width of about 25-60% the radius of the iris section. The inner border of the inner sub-pattern forms a substantial circuit with a diameter of about 45-60mm. The outer border of the inner sub-pattern forms a jagged with arc edges. The shadow ratio of the inner sub-pattern is about 25-60%. Preferably, the pattern of the inner sub-pattern imitates the pattern of the iris.

In the embodiments of this invention, the function of the background sub-pattern is to provide a shade for the subjective sub-pattern. This sub-pattern may be not any particular pattern or design; A random distribution of colors may provide such function. The background sub-pattern may one or more than one color. In the preparation of the pattern, it is possible to use a stool plate with roughness to design the background sub-pattern. Another approach is to generate a random distribution of colored dots to function as the background sub-pattern.

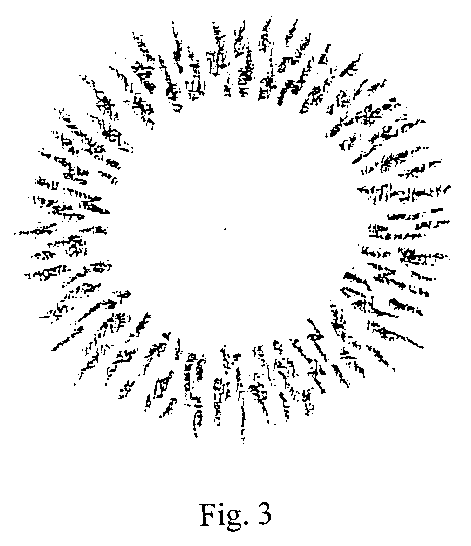

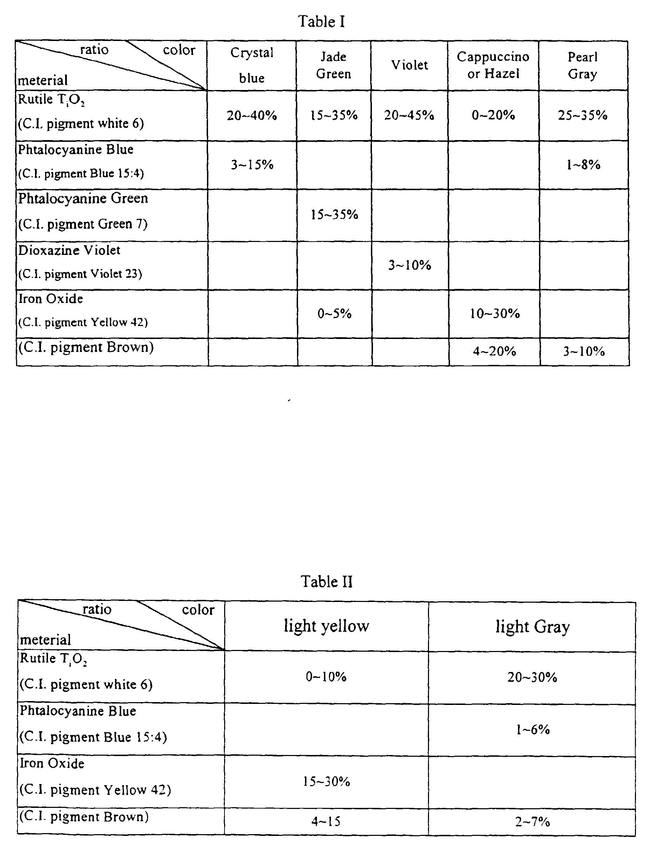

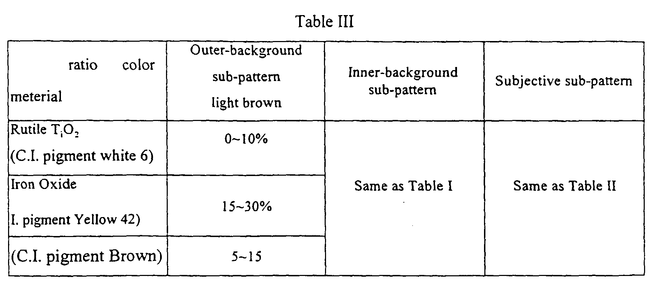

Fig. 3 illustrates the subjective sub-pattern for the colored pattern of the colored contact lens with a natural appearance of this invention. The subjective sub-pattern will be applied to the iris section that surrounds the pupil section.

As shown in Fig. 3, the subjective sub-pattern comprises a plurality of radial, intermittent sectional lines with different widths. The position and width of the subjective sub-pattern is approximately 20-80% of the width of the background sub-pattern. The color of the subjective sub-pattern is preferably different from that of the background sub-pattern and, more preferably, provides strong contrast with that of the background sub-pattern, so to set off the pattern and brightness of the iris.

These three sub-patterns may be applied to the contact lens in sequence or simultaneously, using any conventional tool and processing, such as secondary conversion. The sub-patterns may be applied on the lens or embedded in the lens. A contact lens with the invented pattern provides an appearance very similar to the pattern of the iris.

### EMBODIMENTS

Table I shows combinations of pigments for the background sub-pattern of the embodiments of the colored contact lens with a natural appearance of this invention. As shown in this Table, the background sub-pattern is consisted of two or more colors.

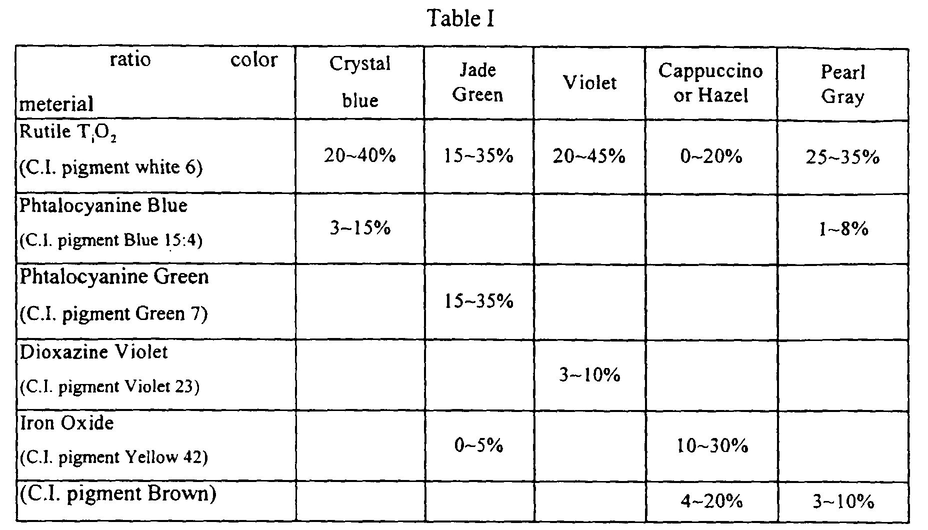

Table II shows combinations of pigments for the subjective sub-pattern of the embodiments of the colored contact lens with a natural appearance of this invention. As shown in this Table, the subjective sub-pattern is consisted of three colors.

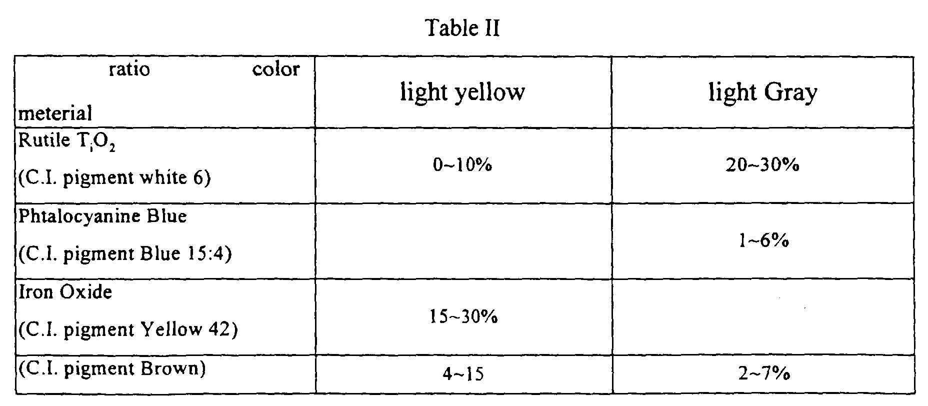

Under subjective tests, a contact lens with a pattern comprising a background sub-pattern of a pigment composition selected from Table I and a subjective sub-pattern of a pigment composition selected from Table II provides a natural appearance to the iris.

Table III shows combinations of pigments for patterns of other embodiments of the colored contact lens of this invention. As shown in this Table, the inner sub-pattern and the outer sub-pattern of the background sub-pattern are applied with pigment compositions in different colors. Under subjective tests, the contact lens shows a natural appearance to the iris.

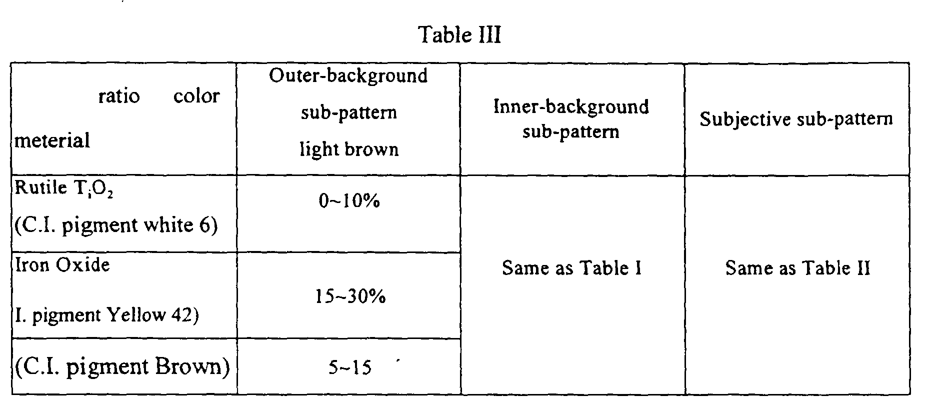

As the present invention has been shown and described with reference to preferred embodiments thereof, those skilled in the art will recognize that the above and other changes may be made therein without departing from the spirit and scope of the invention.

## Claims

1. A contact lens comprising;
a lens suited to be attached to the surface of an eyeball; said lens comprising a non-opaque section to be positioned on surface of pupil of said eyeball and a partially opaque section surrounding said non-opaque section; and
a pattern distributed in the whole area of said partially opaque section, comprising:
a background sub-pattern comprising an inner sub-pattern and outer sub-pattern wherein said outer sub-pattern has a substantially circled outer border and an jagged inner border with arc edges, with a shadow ratio of about 50-75% and said inner sub-pattern has a substantially circled inner board and jagged outer border with arc edges, with a shadow ratio of about 25-60%; and
a subjective pattern comprising a series of radial, intermittent lines, extended to about 20-80% the width of said partially opaque section.

2. The colored contact lens of claim 1 wherein said background sub-pattern has the same color with that of said subjective sub-pattern.

3. The colored contact lens of claim 1 wherein said background sub-pattern has a different color with that of said subjective sub-pattern.

4. The colored contact lens of claim 1 wherein said inner sub-pattern, said outer sub-pattern and said subjective sub-pattern are of different colors.
